# EUROPÄISCHE PATENTANMELDUNG

(11) **EP 2 133 461 A1**
(43) Veröffentlichungstag der Anmeldung: **16.12.2009**
(21) Anmeldenummer: 08010665.1
(22) Anmeldetag: 12.06.2008
(51) Int. Cl.: D06M 13/292, D06M 13/325, D06M 13/332, D06M 13/46, D06M 13/463, D06M 15/507, C08K 5/521, C08L 67/02, D06M 15/61, D21H 17/10, D21H 17/53, D21H 17/56, D21H 21/34

(54) **Zusammensetzung für die Behandlung von Fasermaterialien, insbesondere mittels Ausziehverfahren**

(71) Anmelder: Huntsman Textile Effects (Germany) GmbH, 86462 Langweid a. Lech (DE)
(72) Erfinder: Dermeik, Salman, Dr., 86157 Augsburg (DE); Lemmer, Karl-Heinz, 86156 Augsburg (DE); Braun, Reinhold, 86830 Schwabmünchen (DE); Nassl, Walter, 86444 Affing (DE)

(57) **Zusammenfassung**

Zusammensetzungen, welche sich für die Flammfestausrüstung von Polyestermaterialien mittels eines Ausziehverfahrens eignen, enthalten neben Wasser einen Triester der Phosphorsäure, einen Polyester und ein Amin oder Ammoniumsalz.

## Beschreibung

Die Erfindung betrifft eine Zusammensetzung zur Behandlung von Fasermaterialien.

Es ist bekannt, Fasermaterialien wie z.B. Geweben dadurch flammhemmende Eigenschaften zu verleihen, dass man sie mit bestimmten flüssigen Zusammensetzungen behandelt. Eine Reihe solcher bekannter Zusammensetzungen enthält Phosphorverbindungen. Dies geht unter anderem hervor aus der US 3 374 292, der DE-A 25 09 592, sowie aus den Zusammenfassungen der JP 2004-225 175 A2 und der JP 2004-225 176 A2 in Chemical Abstracts (AN 141:175439 CA und AN 141:175 440 CA).
Ferner sind im Zusammenhang mit flammhemmenden Zusammensetzungen zu erwähnen die WO 2004/060990 A2 und die Derwent-Publikation mit der AN 2006-806707 (betreffend die JP 2006/299 486 A), die WO 00/11085 A und die WO 99/67326 A.

Die Behandlung von Fasermaterialien zum Zweck der flammhemmenden Ausrüstung kann bekanntlich nach verschiedenen Methoden erfolgen. In manchen Fällen kann die flammhemmende Zusammensetzung aufgesprüht werden. Hierfür bestehen jedoch Grenzen bezüglich möglicher Komponenten wegen der Sprühfähigkeit bzw. wegen möglicher Gefahren für die Personen, die das Sprühen durchführen.
Eine häufiger angewandte Methode ist eine Badimprägnierung der Fasermaterialien mittels eines Foulardverfahrens. Bei diesem Verfahren gelangt jedoch nur ein Teil der in der Foulardflotte anwesenden Menge an Flammschutzmittel auf das Fasermaterial, was gegebenenfalls zu erheblichen Verlusten an teuren Produkten führen kann.
Ein Verfahren, das den erwähnten Nachteil des Foulardverfahrens nicht oder nur in geringerem Ausmaß aufweist, ist das Ausziehverfahren. Hierbei werden die Fasermaterialien mit wässrigen Flotten behandelt, welche Wirksubstanzen wie z.B. flammhemmende Mittel enthalten, und die Fasermaterialien nehmen dabei diese Wirksubstanzen quantitativ oder nahezu quantitativ auf, so dass die Flotte bei ihrer Anwendung an diesen Wirksubstanzen verarmt. Die zahlreichen bekannten Verfahren zur Erzeugung verschiedener Grade an Flammwidrigkeit auf synthetischen oder Mischgeweben weisen verschiedene Nachteile auf, wobei die mangelnde Beständigkeit gegen Waschen am häufigsten erwähnt wird. Die derzeit bekanntesten Verfahren bestehen aus einer Oberflächenbehandlung, die anschließend einer sog. Thermosolierung bei 180°C bis 210°C unterzogen wird. Die dafür häufig verwendeten cyclischen Phosphonate sind vor der Fixierung gut wasserlöslich und sind ohne diese Temperaturbehandlung nicht waschbeständig. Polymere Flammschutzmittel hingegen, die auf der Oberfläche verbleiben, führen meistens zu härterem Griff des Textils. Im Gegensatz zu einer Fixierung auf der Faseroberfläche bei Trockenhitze oder mittels Hochtemperaturthermosolierung lassen sich die aus einer Hochtemperaturflotte mittels Ausziehverfahren in die Faser eingebrachten Flammschutzmittel z.B. auch gleichzeitig mit der Färbung in einem Schritt kombinieren. Ein Beispiel einer Vorrichtung zu einer solchen Behandlung ist aus der US 3 922 737 bekannt. Aber auch ohne die Kombination mit Färbung lassen sich aus einer solchen Behandlung wesentliche Vorteile ableiten, wie z.B. eine bessere Permanenz ohne Thermosol-Verfahren.
Nun ist es jedoch so, dass für das Ausziehverfahren eine Zusammensetzung dann besonders gut geeignet ist, wenn sie zwar in Form einer wässrigen Dispersion vorliegt, diese Dispersion aber keine hohe Stabilität besitzt. Im Gegensatz dazu sollen wässrige Dispersionen, welche für Foulardverfahren eingesetzt werden, gute Stabilität aufweisen, damit sie auch bei längerer Lagerung nicht in ihre Bestandteile trennen.

Einige aus dem Stand der Technik bekannte Zusammensetzungen sind wässrige Dispersionen mit guter Stabilität auch nach längeren Lagerzeiten. Solche Dispersionen sind für Foulardverfahren geeignet, weisen aber nur bedingte Effektivität bei Verwendung in Ausziehverfahren auf, weil dort eingeschränkte Dispersionsstabilität zu optimalen Ergebnissen führt.

Die aus dem Stand der Technik bekannten Zusammensetzungen weisen daneben beim Einsatz für flammhemmende Ausrüstung von Fasermaterialien noch weitere Nachteile auf.
So sind z.B. für die Herstellung der aus dem Stand der Technik bekannten Zusammensetzungen häufig relativ hohe Mengen an Phosphorverbindungen erforderlich, um akzeptablen Flammschutz zu erzielen. Dies gilt auch dann, wenn die Fasermaterialien ganz oder überwiegend aus Polyester bestehen.

Aufgabe der vorliegenden Erfindung war es, eine Zusammensetzung zur Verfügung zu stellen, welche eine gute flammhemmende Ausrüstung bei Fasermaterialien ermöglicht, die vollständig oder überwiegend aus Polyester bestehen, wobei eine gute flammhemmende Wirkung bereits bei niedrigerer Auflage der Zusammensetzung auf den Fasermaterialien erreicht werden sollte, als bei bekannten Ausrüstungen mit Phosphorverbindungen, wobei die Zusammensetzungen sich insbesondere für die Anwendung in Ausziehverfahren gut eignen sollten. Eine weitere Aufgabe bestand darin, ein Verfahren zur Behandlung von Fasermaterialien, insbesondere solchen aus Polyester, zu entwickeln, welches zu guten flammhemmenden Eigenschaften der behandelten Fasermaterialien führt, auch dann, wenn die Ausziehflotte zusätzlich Farbstoffe und/oder UV-Absorber enthält.

Die Aufgabe wurde gelöst durch eine Zusammensetzung, welche mindestens die Komponenten A bis D enthält,
wobei Komponente A ein Triester der Phosphorsäure ist,
wobei Komponente B ein Polyester ist, welcher keine aromatischen Reste in der vom Alkohol stammenden Einheit enthält und wobei 0 bis 10 % der von der Säure stammenden Einheiten aromatische Reste enthalten,
wobei Komponente C ein Amin, vorzugsweise ein sekundäres Amin oder ein polymeres Amin, oder ein Ammoniumsalz ist, wobei das Kation dieses Ammoniumsalzes von der Form NR₄^{⊕} ist,
wobei mindestens einer der Reste R ein Alkylrest mit 1 bis 22 Kohlenstoffatomen ist,
und
wobei Komponente D Wasser ist,
wobei es bei jeder der Komponenten A, B und C möglich ist, dass an Stelle eines einzigen solchen Produkts eine Mischung mehrerer Komponenten A bzw. B bzw. C anwesend ist
und durch ein Verfahren zur Behandlung von Fasermaterialien, wobei man das Fasermaterial mit einer Zusammensetzung der genannten Art in Kontakt bringt, vorzugsweise mittels eines Ausziehverfahrens.

Durch die Behandlung mit erfindungsgemäßen Zusammensetzungen lassen sich gute flammhemmende Eigenschaften bei Fasermaterialien erzielen. Die Fasermaterialien können Fasern oder Garne sein; vorzugsweise sind sie textile Flächengebilde in Form von Geweben oder Vliesen (nonwovens). Mit erfindungsgemäßen Zusammensetzungen lassen sich gute flammhemmende Eigenschaften auch auf Fasermaterialien erzielen, die zu 80 bis 100 Gew% aus Polyester, insbesondere aus Polyethylenterephthalat oder Polybutylenterephthalat, bestehen. Die Behandlung solcher Polyestermaterialien stellt eine bevorzugte Verwendung erfindungsgemäßer Zusammensetzungen dar. Es können jedoch auch andere Fasermaterialien flammhemmend ausgerüstet werden, z.B. solche aus Wolle oder aus Fasermischungen, die weniger als 80 Gew% Polyester enthalten.

Die erfindungsgemäßen Zusammensetzungen sind besonders gut für die Anwendung im Ausziehverfahren geeignet. Hierbei besteht ein besonderer zusätzlicher Vorteil darin, dass diese Ausziehverfahren auch bei relativ niedrigen Temperaturen, z.B. im Bereich von 60°C bis 100°C durchgeführt werden können.

Die erfindungsgemäßen Zusammensetzungen sind vorzugsweise wässrige Dispersionen, welche nur begrenzte (Lager-)Stabilität aufweisen und sich deshalb ausgezeichnet für Ausziehverfahren eignen. Verantwortlich für die begrenzte Stabilität ist Komponente C.

Eine bevorzugte Methode, erfindungsgemäße Zusammensetzungen herzustellen, besteht darin, dass man zuerst eine stabile wässrige Dispersion herstellt, welche die Komponenten A, B und D enthält, nicht aber Komponente C. Diese stabile wässrige Dispersion enthält üblicherweise weniger Wasser als die spätere erfindungsgemäße Zusammensetzung. Sie ist eine höher konzentrierte Vorstufe einer erfindungsgemäßen Zusammensetzung, die jedoch noch keine Komponente C enthält. Diese konzentrierte Dispersion ist stabil und kann über längere Zeit gelagert werden. Erst kurz vor ihrer Verwendung zur Behandlung von Fasermaterial wird diese konzentrierte Dispersion verdünnt, und es wird zwecks Verbesserung der Eignung für Ausziehverfahren eine Komponente C hinzugefügt.
An Stelle einer einzigen Komponente A bzw. B bzw. C können erfindungsgemäße Zusammensetzungen auch mehrere Produkte A enthalten, welche unter die oben genannte Definition von Komponente A fallen, das Gleiche gilt bezüglich der Komponenten B und C.
Eine bevorzugte Methode zur Herstellung erfindungsgemäßer Zusammensetzungen besteht darin, dass man zuerst eine wässrige Dispersion mit einer Konzentration von 20 bis 80 Gew% (dies bedeutet den Gehalt der Summe aller Stoffe in der Zusammensetzung außer Wasser) herstellt, welche die Komponenten A, B, D und einen oder mehrere Dispergatoren enthält und kurz vor Gebrauch Wasser und Komponente C in solchen Mengen hinzufügt, dass die fertige Zusammensetzung 88 bis 98, vorzugsweise 93 bis 97, Gew% Wasser enthält und 5 bis 20 g/l an Komponente C enthält. In der fertigen erfindungsgemäßen Zusammensetzung liegt vorzugsweise das Gewichtsverhältnis von Komponente A zu Komponente B im Bereich von 0,8:1 bis 1,5:0,4, vorzugsweise im Bereich von 2,0:1 bis 2,5:1.

Ein besonderer Vorteil erfindungsgemäßer Zusammensetzungen besteht darin, dass es bei ihrer Verwendung für die Behandlung von Fasermaterialien möglich ist, bereits mit geringeren als den im Stand der Technik üblichen Auflagemengen an Phosphorverbindungen auf dem Fasermaterial gute flammhemmende Eigenschaften zu erzielen. Dies ist offensichtlich auf eine synergistische Wirkung zwischen den Komponenten A und B erfindungsgemäßer Zusammensetzungen zurückzuführen, denn die erzielbare flammhemmende Wirkung ist deutlich höher als bei Verwendung von Komponente A alleine oder von Komponente B alleine. Diese synergistische Wirkung ist für den Fachmann unerwartet und überraschend, vor allem auch deshalb, weil bei Verwendung von Komponente B alleine eine flammhemmende Wirkung überhaupt nicht zu erzielen ist.
Ein weiterer Vorteil erfindungsgemäßer Zusammensetzungen liegt darin, dass sowohl Komponente A als auch Komponente B unter halogenfreien Verbindungen ausgewählt werden können und trotzdem gute flammhemmende Wirkung erzielt werden kann. Bei halogenhaltigen Zusammensetzungen, die aus dem Stand der Technik bekannt sind, können sich demgegenüber Nachteile ergeben, die dem Fachmann bekannt sind.

Erfindungsgemäße Zusammensetzungen enthalten mindestens je eine Komponente A bis D. Sie können auch Gemische von Verbindungen enthalten, welche unter die unten genannte Definition von Komponente A fallen, und/oder Gemische von Verbindungen, welche unter die unten genannte Definition von Komponente B und/oder Gemische, welche unter die unten genannte Definition von Komponente C fallen. Ferner können sie zusätzlich weitere Produkte enthalten, welche weder unter die Definition von Komponente A noch unter die Definition von Komponente B noch unter die Definition von Komponente C fallen. Solche Produkte sind beispielsweise bekannte Weichgriffmittel für Textilien, Tenside, Carrier, Diffusionsbeschleuniger, Farbstoffe, UV-Schutzmittel usw. Vorzugsweise enthalten erfindungsgemäße Zusammensetzungen jedoch keine Halogenverbindungen, und sie enthalten vorzugsweise keine anderen Polyester als solche, welche unter die unten genannte Definition von Komponente B fallen.

Bevorzugte Ausführungsformen erfindungsgemäßer Zusammensetzungen sind dadurch gekennzeichnet, dass das Gewichtsverhältnis von Komponente A zu Komponente B im Bereich von 0,8:1 bis 1,5:0,4 liegt, vorzugsweise im Bereich von 2,0:1 bis 2,5:1. Dieses Gewichtsverhältnis wird zweckmäßigerweise bereits bei der Herstellung der oben erwähnten Vorstufe eingestellt, also bei der Herstellung einer stabilen wässrigen Dispersion, welche die Komponenten A und B und gegebenenfalls einen oder mehrere Dispergatoren, aber noch nicht Komponente C enthält.

Die Herstellung der erwähnten konzentrierten Vorstufe erfindungsgemäßer Zusammensetzungen kann im allgemeinen in einfacher Weise durch Vermischen der einzelnen Komponenten erfolgen, gegebenenfalls bei etwas erhöhter Temperatur und/oder mechanischer Homogenisierung. Diese Vorstufe kann durch Verdünnen mit Wasser und Hinzufügen von Komponente C zu einer erfindungsgemäßen Zusammensetzung weiterverarbeitet werden.
Für eine Reihe von Anwendungszwecken ist es von Vorteil, wenn erfindungsgemäße Zusammensetzungen in dispergierter Form eingesetzt werden. Hierfür kommen vor allem wässrige Dispersionen in Betracht, wobei zur Dispergierung in Wasser einer oder mehrere Dispergatoren verwendet werden. Geeignete Dispergatoren sind aus dem Fachmann bekannten Produkten auswählbar, z.B. eignen sich nichtionogene ethoxilierte Verbindungen. Hier kommen vor allem ethoxilierte Alkohole oder ethoxilierte Carbonsäuren in Frage. Neben nichtionogenen Dispergatoren sind insbesondere auch anionische Dispergatoren geeignet wie z.B. Alkalimetallsalze von Carbonsäuren, Alkalimetallsulfate oder Alkalimetallsulfonate. Auch Mischungen, welche sowohl nichtionogene als auch anionische Dispergatoren enthalten, lassen sich verwenden. Bei der Herstellung der konzentrierten Vorstufen erfindungsgemäßer Zusammensetzungen werden vorzugsweise bereits diejenigen Dispergatoren verwendet, die in der fertigen erfindungsgemäßen Zusammensetzung erwünscht sind.

Komponente A der erfindungsgemäßen Zusammensetzungen ist ein Triester der Orthophosphorsäure. Das heißt alle 3 Hydroxygruppen der Orthophosphorsäure O = P(OH)₃ sind mit alkoholischen Verbindungen verestert. Diese 3 Alkoholeinheiten können von gleicher oder von verschiedener Art sein. Vorzugsweise sind alle 3 Alkoholeinheiten aus einwertigen oder zweiwertigen aromatischen Alkoholen ausgewählt. Besonders gut geeignet als Alkoholeinheiten der Phosphorsäuretriester sind Phenol und Resorcin. Eine besonders bevorzugte Ausführungsform erfindungsgemäßer Zusammensetzungen ist **dadurch gekennzeichnet, dass** Komponente A eine Verbindung der Formel (I) oder der Formel (II) oder ein Gemisch dieser beiden Verbindungen ist, 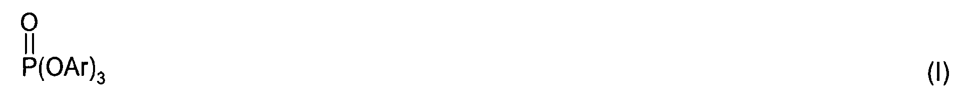 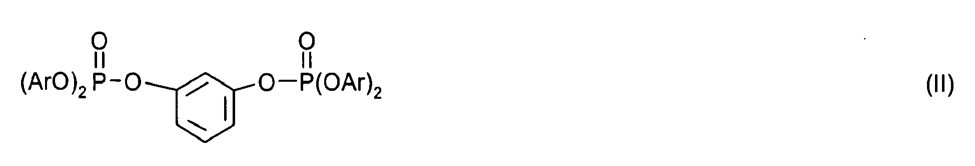 wobei Ar für einen einwertigen aromatischen Rest, vorzugsweise für den Phenylrest steht. Diejenige Verbindung der Formel (II), bei der Ar = Phenyl ist, die im Folgenden "RDP" genannt wird, ist auf dem Markt erhältlich und kann gemäß der Lehre der US 5 457 221 hergestellt werden.
An Stelle der genannten bevorzugten Triester, die aromatische Reste enthalten oder zusätzlich hierzu können erfindungsgemäße Zusammensetzungen auch Triester der Orthophosphorsäure enthalten, in welchen keine aromatischen Reste enthalten sind. Als Beispiel sei Tri-n-butylphosphat erwähnt.

Komponente B der erfindungsgemäßen Zusammensetzungen ist ein Polyester, der aus von Säure und Alkohol stammenden Einheiten aufgebaut ist. Von großer Bedeutung ist es, dass die vom Alkohol stammenden Einheiten keine aromatischen Reste enthalten. Andernfalls ist keine optimale flammhemmende Wirkung bei ausgerüsteten Textilien zu erzielen und/oder es resultieren andere Nachteile.

Vorzugsweise enthalten die als Komponente B verwendeten Polyester überhaupt keine aromatischen Reste, vorzugsweise ist also auch die von der Säure stammende Einheit frei von aromatischen Resten. Im Gegensatz zur Alkoholeinheit kann die Säureeinheit jedoch kleinere Anteile an aromatischen Resten enthalten. Der Anteil an aromatische Reste enthaltenden Säureeinheiten im Polyester darf jedoch 10 %, bezogen auf die Gesamtzahl der von der Säure stammenden Einheiten, nicht übersteigen.

Eine besonders bevorzugte Ausführungsform erfindungsgemäßer Zusammensetzungen ist **dadurch gekennzeichnet, dass** Komponente B ein Polyester ist, der aus einer aliphatischen α, ω-Dicarbonsäure und einem aliphatischen zweiwertigen oder mehrwertigen Alkohol aufgebaut ist, wobei vorzugsweise sich an jedem der beiden Kettenenden des zweiwertigen oder mehrwertigen Alkohols je eine Hydroxygruppe befindet.
Im Rahmen der hier genannten bevorzugten Ausführungsform sind vor allem solche aliphatische α, ω-Dicarbonsäuren gut als Säuren geeignet, die 4 bis 10 Kohlenstoffatome aufweisen, insbesondere unverzweigte Dicarbonsäuren der genannten Art. Besonders gute Ergebnisse lassen sich erzielen, wenn der als Komponente B verwendete Polyester aus Adipinsäure und Alkohol aufgebaut ist.
Die Alkoholeinheit der als Komponente B geeigneten Polyester stammt vorzugsweise von einem aliphatischen zweiwertigen oder mehrwertigen Alkohol, der an jedem der beiden Kettenenden je eine Hydroxygruppe aufweist. Der zwei- oder mehrwertige Alkohol kann hierbei verzweigt oder linear aufgebaut sein. Gut geeignet als Alkohol für die Polyester sind unter anderem Ethylenglykol, 1,3-Propylenglykol, 1,4-Butandiol, Diethylenglykol, Triethylenglykol, Polyethylenglykol, Neopentylglykol und 1,6-Hexandiol.

Die Polyester, welche als Komponente B verwendet werden, können, wie beschrieben, aus einer Dicarbonsäure und einem aliphatischen zwei- oder mehrwertigen Alkohol aufgebaut sein. Eine andere Möglichkeit besteht darin, Polyester zu verwenden, welche sich von Hydroxycarbonsäuren ableiten, vorzugsweise von ω-Hydroxy-1-carbonsäuren, bei denen also die Säure- und die Alkoholeinheit im gleichen Molekül vorliegen. Bei der Herstellung der entsprechenden Polyester kann man von der ω-Hydroxy-1-carbonsäure oder von deren Lacton ausgehen. Bevorzugt sind unter den genannten Polyestern solche, die sich von Caprolacton ableiten.
Die als Komponente B geeigneten Polyester können aus einer einzigen Art von Carbonsäuren und einer einzigen Art von Alkohol aufgebaut sein. Sie können jedoch auch aus mehreren unterschiedlichen Arten von Carbonsäuren und/oder Arten von Alkoholen aufgebaut sein. Vorzugsweise sind hierbei alle verwendeten Carbonsäuren und alle verwendeten Alkohole aus den oben aufgeführten Verbindungsklassen ausgewählt. Gut geeignet als Komponente B sind auch Polyester, die sich aus einem Gemisch von Caprolacton und mehrwertigem Alkohol, z.B. Neopentylglykol, ableiten. Ein Beispiel hierfür ist das Produkt TONE^{®} Polyol 2241 der Firma Dow.

Vorzugsweise liegt das Molekulargewicht des als Komponente B verwendeten Polyesters im Bereich von 200 bis 8000. Besonders gut geeignet sind Polyester mit einem Molekulargewicht im Bereich von 500 bis 4000.

Komponente C erfindungsgemäßer Zusammensetzungen ist ein Amin oder ein Ammoniumsalz. Wird ein Ammoniumsalz als Komponente C verwendet, so ist dessen Kation von der Form NR₄^{⊕}. Mindestens einer der 4 Reste R muß ein Alkylrest mit 1 bis 22 Kohlenstoffatomen sein; einer oder mehrere der anderen 3 Reste R können Wasserstoff oder ebenfalls ein Alkylrest der genannten Art sein. Besonders gut geeignet als Komponente C sind sekundäre Amine oder deren entsprechende Ammoniumsalze. Hierbei sind offenkettige sekundäre Amine den sekundären Aminen mit cyclischen Resten überlegen. Es können auch polymere Amine als Komponente C eingesetzt werden wie z.B. LUPAMIN^{®}-Typen der Firma BASF (Polyamine auf Basis Vinylamin). Besonders bevorzugte Amine sind Polyethylenimine, Diethylentriamin und Triethylentetramin. Als geeignete Ammoniumsalze sind Chloride wie z.B. Poly-Diallyldimethylammonium-chlorid zu erwähnen.
Selbstverständlich können auch Gemische der genannten Verbindungen vorteilhaft als Komponente C verwendet werden. Bei der Auswahl der Komponente C sollte darauf geachtet werden, dass die Stabilität der erwähnten konzentrierten Vorstufe durch Hinzufügen der Komponente C vermindert wird.

Die Erfindung wird nachfolgend durch Ausführungsbeispiele veranschaulicht.

### BEISPIELE

Wirkware aus Polyester wird in einen Färbebehälter, geeignet für Hochtemperaturfärbungen, eingebracht. Dieser Behälter wird daraufhin mit der Flottenmenge der nachfolgend angegebenen Zusammensetzung befüllt, welche das 20-fache des Warengewichts beträgt. Die Flotte enthielt

24 % einer Komponente C (Amin), für den Fall, dass Komponente C das unten genannte Hilfsmittel A ist, bzw. 32 % einer Komponente C für den Fall, dass Komponente C das unten genannte Hilfsmittel B oder D ist, wie in Anspruch 1 angegeben (eingesetzt als 2,5 Gew%-Lösung in Wasser)
2 % eines Netzmittels
8 % einer Pufferlösung (pH 4,5)
50 % einer 33 Gew%igen Dispersion eines Flammschutzmittels

Diese Zahlen/Mengenangaben sind auf das Gewicht der Wirkware in trockenem Zustand bezogen.

Es wurden verschiedene Flotten der oben genannten Zusammensetzung verwendet, nämlich entweder Flotten, die als Komponente C das "Hilfsmittel A" oder das "Hilfsmittel B" oder das "Hilfsmittel D" enthielten. Als (nicht-erfindungsgemäße) Vergleichsflotten dienten Flotten, welche keine Komponente C, also keines der "Hilfsmittel" A, B oder D enthielten.
Hilfsmittel A = Polyethylenimin (LUPASOL^{®} FC der Firma BASF)
Hilfsmittel B = Diethylentriamin
Hilfsmittel D = Triethylentetramin

Zur Behandlung der Polyester-Wirkware mit der jeweiligen Flotte wurde bei einigen Versuchen mit einem Hochtemperaturverfahren (HT), bei anderen mit einem Verfahren bei 90°C gearbeitet. Diese beiden Verfahrensvarianten werden nachfolgend beschrieben:

### Hochtemperaturverfahren:

Innerhalb von 110 Minuten wird die Flotte, welche die Wirkware enthält, von Raumtemperatur auf 135°C aufgeheizt und danach bei 135°C 60 Minuten gehalten und schließlich auf 40°C innerhalb von 55 Minuten abgekühlt. Danach wird die Ware gespült und auf übliche Weise mit einer Flotte auf Basis Na-Dithionitlösung, 2 g/l in Mischung mit 1,65 g/l Natriumhydroxid reduktiv nachbehandelt, dann mit Essigsäure (60 %ig) neutralisiert und getrocknet.

### Verfahren bei 90°C:

Innerhalb von 20 Minuten wird die Flotte von Raumtemperatur auf 90°C aufgeheizt und danach bei 90°C 90 Minuten gehalten und schließlich auf 40°C innerhalb von 40 Minuten abgekühlt. Danach wird die Ware gespült und auf übliche Weise mit Na-Dithionit reduktiv nachbehandelt, mit Essigsäure 60%ig neutralisiert und getrocknet.

Die Dispersion des Flammschutzmittels setzt sich zusammen aus RDP und einem Polycaprolacton (TONE^{®} Polyol 2241 der Firma Dow) im Gewichtsverhältnis 2,33 : 1 und den nachfolgend genannten Dispergatoren.

### Herstellung der Dispersion des Flammschutzmittels:

Zur Herstellung der Dispersion wird zunächst eine Mischung aus Wasser, den Dispergatoren und der Substanz zur pH-Einstellung mit einem schnelllaufenden Rührer hergestellt. Die organische Phase aus RDP und Polymer wird in einem anderen Gefäß auf 60 - 70°C erhitzt und mit schnelllaufendem Rührer einheitlich homogenisiert. Dieser Ölphase wird dann die Mischung der Dispergatoren mit Wasser zugesetzt, entweder in Form einer Mischung oder als klare Lösung. Diese Mischung wird dann mit einem schnelllaufenden Rührer zu einer Voremulsion verarbeitet. Alle Mischungsschritte erfolgen zweckmäßig bei erhöhter Temperatur, vorzugsweise bei 60-70°C.

Die oben genannte Substanz zur pH-Einstellung war ein Puffer in Form eines Salzes der Phosphorsäure. Die Dispergatoren werden in der unten aufgeführten Tabelle 1 genannt.
Die so erhaltene Voremulsion von wässriger Phase und Ölphase wird dann einer Hochdruckdispergierung unterworfen, wobei ein Hochdruckhomogenisator verwendet wird. Die so erhaltene Dispersion I bzw. II wird für die unten zusammengefassten Versuche verwendet.

**Tabelle 1**

| Dispersion Nr. | Dispergator A | Dispergator B | Puffer auf pH | Ionogenität |
|---|---|---|---|---|
| I | Marlipal 13/200 | Marlipal 13/060 | 5,6 | nichtionogen |
| II | Rewopol NOS 25 | Marlipal 13/200 | 5,6 | anionisch |

Bei den einzelnen Versuchen wurde jeweils die Menge an aufgenommenem Produkt in Gew% (= Auflage) auf der Ware bestimmt. Außerdem wurde bei den einzelnen Proben jeweils die Brennzeit ermittelt, wobei als Testmethode die DIN 54336 eingesetzt wurde.
In der nachfolgenden Tabelle II sind die Ergebnisse dargestellt, wobei "BZ" die Nachbrennzeit in Sekunden gemäß der DIN 54336 bedeutet. Höhere Werte für die Brennzeit bedeuten ein niedrigeres/schlechteres Niveau für den Flammschutz.

**Tabelle II**

| Dispersion Nr. | HT oder 90°C | Hilfsmittel | Auflage (Gew%) | Brenntest gem. DIN (BZ = Nachbrennzeit) in Sekunden |
|---|---|---|---|---|
| I | HT | ohne | 9,0 % | 49 |
| I | HT | A* | 11,0 % | 0 |
| I | HT | B* | 9,4% | 8 |
| I | HT | D | 10,3% | 1 |
| II | HT | ohne | 5,1 % | 37 |
| II | HT | A* | 12,2 % | 0 |
| II | HT | B* | 5,3% | 7 |
| II | HT | D | 6,1 % | 2 |
| I | 90°C | ohne | 5,1 % | 40 |
| I | 90°C | A* | 10,1 % | 0 |
| I | 90°C | B* | 5,5 % | 2 |
| I | 90°C | D | 6,3 % | 6 |
| II | 90°C | ohne | 2,9 % | 33 |
| II | 90°C | A* | 11,1 % | 0 |
| II | 90°C | B* | 3,5 % | 21 |
| II | 90°C | D | 3,6 % | 22 |

| | | | | |
|---|---|---|---|---|
| *A = Polyethylenimin LUPASOL^{®} FC, mit einer mittleren Molmasse (Zahlenmittel) von 800-1000, wird von der Fa. BASF^{®} geliefert. B = Diethylentriamin D = Triethylentetramin | | | | |

Aus diesen Ergebnissen lassen sich die folgenden Schlussfolgerungen ziehen:

Durch die erfindungsgemäße Zugabe der Hilfsmittel A bzw. B bzw. D zur Flotte lässt sich eine höhere Ausziehrate erzielen. Bei tieferen Temperaturen ist LUPASOL^{®} FC effizienter als andere in den Versuchen erwähnte Hilfsmittel, während bei höheren Temperaturen die Unterschiede weniger deutlich sind. Eine ausreichende Ausziehrate ist mit den erfindungsgemäßen Flotten sowohl aus anionischen als auch nichtionogenen Dispersionen in der Ausziehflotte gewährleistet.

## Patentansprüche

1. Zusammensetzung, vorzugsweise in Form einer wässrigen Dispersion, welche mindestens die Komponenten A bis D enthält,
wobei Komponente A ein Triester der Phosphorsäure ist,
wobei Komponente B ein Polyester ist, welcher keine aromatischen Reste in der vom Alkohol stammenden Einheit enthält und wobei 0 bis 10 % der von der Säure stammenden Einheiten aromatische Reste enthalten,
wobei Komponente C ein Amin, vorzugsweise ein sekundäres Amin oder ein polymeres Amin, oder ein Ammoniumsalz ist, wobei das Kation dieses Ammoniumsalzes von der Form NR₄^{⊕} ist, wobei mindestens einer der Reste R ein Alkylrest mit 1 bis 22 Kohlenstoffatomen ist,
und
wobei Komponente D Wasser ist,
wobei es bei jeder der Komponenten A, B und C möglich ist, dass an Stelle eines einzigen solchen Produkts eine Mischung mehrerer Komponenten A bzw. B bzw. C anwesend ist.

2. Zusammensetzung nach Anspruch 1, **dadurch gekennzeichnet, dass** sie 88 bis 98, vorzugsweise 93 bis 97, Gew% an Komponente D enthält.

3. Zusammensetzung nach Anspruch 1 oder 2, **dadurch gekennzeichnet, dass** sie 5 bis 20 g/l an Komponente C enthält.

4. Zusammensetzung nach einem oder mehreren der Ansprüche 1 bis 3, **dadurch gekennzeichnet, dass** das Gewichtsverhältnis von Komponente A zu Komponente B im Bereich von 0,8:1 bis 1,5:0,4 liegt, vorzugsweise im Bereich von 2,0:1 bis 2,5:1.

5. Zusammensetzung nach einem oder mehreren der Ansprüche 1 bis 4, **dadurch gekennzeichnet, dass** Komponente A ein Triester ist, welcher aufgebaut ist aus Einheiten, die sich von Phosphorsäure ableiten und Einheiten, die sich aus ein- oder zweiwertigen aromatischen Alkoholen ableiten, wobei der Triester bevorzugt eine Verbindung der Formel (I) oder der Formel (II) oder ein Gemisch dieser beiden Verbindungen ist, 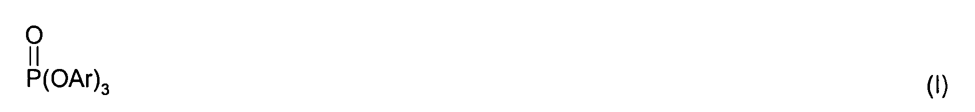 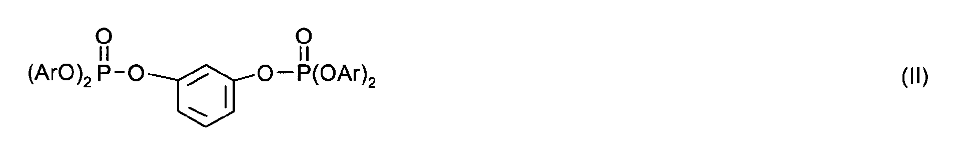 wobei Ar für einen einwertigen aromatischen Rest, vorzugsweise für den Phenylrest steht.

6. Zusammensetzung nach einem oder mehreren der Ansprüche 1 bis 5, **dadurch gekennzeichnet, dass** Komponente B ein Polyester ist, der aus einer aliphatischen α, ω-Dicarbonsäure und einem aliphatischen zweiwertigen oder mehrwertigen Alkohol aufgebaut ist, wobei vorzugsweise sich an jedem der beiden Kettenenden des zweiwertigen oder mehrwertigen Alkohols je eine Hydroxygruppe befindet.

7. Zusammensetzung nach Anspruch 6, **dadurch gekennzeichnet, dass** die aliphatische Dicarbonsäure 4 bis 10 Kohlenstoffatome aufweist, wobei diese Dicarbonsäure bevorzugt Adipinsäure ist.

8. Zusammensetzung nach Anspruch 6 oder 7, **dadurch gekennzeichnet, dass** der aliphatische Alkohol ausgewählt ist aus Ethylenglykol, 1,3-Propylenglykol, 1,4-Butandiol, Diethylenglykol, Triethylenglykol, Polyethylenglykol, Neopentylglykol und 1,6-Hexandiol.

9. Zusammensetzung nach einem oder mehreren der Ansprüche 1 bis 5, **dadurch gekennzeichnet, dass** Komponente B ein Polyester ist, der sich von einer ω-Hydroxy-1-carbonsäure oder deren Lacton ableitet, vorzugsweise von Caprolacton.

10. Zusammensetzung nach einem oder mehreren der Ansprüche 1 bis 9, **dadurch gekennzeichnet, dass** Komponente B ein Molekulargewicht im Bereich von 200 bis 8000, vorzugsweise von 500 bis 4000, besitzt.

11. Zusammensetzung nach einem oder mehreren der Ansprüche 1 bis 10, **dadurch gekennzeichnet, dass** Komponente C ein Polyethylenimin oder Triethylentetramin oder Diethylentriamin oder ein Gemisch ist, das zwei oder drei dieser Amine enthält.

12. Zusammensetzung nach einem oder mehreren der Ansprüche 1 bis 10, **dadurch gekennzeichnet, dass** Komponente C ein Ammoniumsalz ist, dessen Anion das Chloridanion ist, vorzugsweise Poly-Diallyldimethylammoniumchlorid.

13. Verfahren zur Behandlung von Fasermaterialien, wobei man das Fasermaterial mit einer Zusammensetzung gemäß einem oder mehreren der Ansprüche 1 bis 12 in Kontakt bringt, vorzugsweise mittels eines Ausziehverfahrens.

14. Verfahren nach Anspruch 13, **dadurch gekennzeichnet, dass** es ein Ausziehverfahren ist, das bei einer Temperatur im Bereich von 60°C bis 100°C durchgeführt wird.

15. Verfahren nach Anspruch 13 oder 14, **dadurch gekennzeichnet, dass** das Fasermaterial zu 80 bis 100 Gew% aus Polyester besteht.
